# EUROPEAN PATENT SPECIFICATION

(11) **EP 1 470 991 B1**
(45) Date of publication and mention of the grant of the patent: **27.07.2011**
(21) Application number: 04009323.9
(22) Date of filing: 20.04.2004
(51) Int. Cl.: B62D 25/20, B62D 25/08, B62D 29/04, B62D 43/10, B60R 13/08

(54) **Resin-made floor panel structure**
Kofferraumboden aus Kunststoff
Structure de plancher de coffre en plastique

(30) Priority: 24.04.2003 JP 2003120242
(43) Date of publication of application: 27.10.2004
(73) Proprietor: DaikyoNishikawa Corporation, Saka-cho Aki-gun Hiroshima 731-4311 (JP); Mazda Motor Corporation, Aki-gun, Hiroshima 730-8670 (JP)
(72) Inventor: Harima, Issei, Higashihiroshima-shi Hiroshima 739-0193 (JP); Takemoto, Yoshihiro, Higashihiroshima-shi Hiroshima 739-0193 (JP); Kamura, Takanobu, Aki-gun Hiroshima 730-8670 (JP); Fukuhara, Chie, Aki-gun Hiroshima 730-8670 (JP); Tochioka, Takahiro, Aki-gun Hiroshima 730-8670 (JP)
(74) Representative: Herrmann, Uwe

(56) References cited:
- EP-A- 1 281 604
- EP-A1- 0 270 097
- EP-A1- 1 084 942
- JP-A- 4 193 691
- JP-A- 62 050 254

## Description

### BACKGROUND OF THE INVENTION

### 1. Field of the Invention

The present invention relates to a resin-made floor panel structure applied to a floor of vehicle such as automobile.

### 2. Description of the Related Art

As is well known, conventionally, the floors of vehicles such as automobiles have been constituted by using floor panels made of steel.

Recently, however, for a higher fuel cost efficiency, for example, the car body is expected to reduce in weight progressively. And, in order to meet such need, it is attempted to reduce the weight of the vehicle floor by using a floor panel made of resin (see, for example, Japanese Patent Laid-open Publication No. 2001-10542).

By using a resin-made floor panel instead of steel plate structure, the weight of the vehicle floor is reduced, but the strength and rigidity are lowered at the same time, and further due to weight reduction of panel itself, the resonance point becomes higher, and problems of vibration and noise in the floor section become more serious.

To solve such problems, it may be considered to increase the thickness of the resin floor panel, but if the thickness is increased too much, the weight and the manufacturing cost are increased, and the merit of using resin for floor panel may be lost.

EP-A1-0 270 097 discloses a body for motor-vehicle including a plastic floor panel according to the preamble of claim 1 provided with a pair of recess s for spare wheel and fuel tank, and further two recesses for vehicle's tool kit and for glass washing device, wherein the recesses are positioned apart from each other.

EP-A1-1 084 942 discloses a structure moulded from plastic to form the rear floor of the car with a housing for spare tire, wherein the spare tire storage space and the other storage spaces are provided apart from each other.

### SUMMARY OF THE INVENTION

The invention is devised in the light of the above technical problems, and it is a basic object thereof to suppress vibrations of the floor section, without increasing the weight, in a relatively simple structure in a case of using a resin-made floor panel.

In the process of intense research and development for achieving the object, the present inventors found a close relationship between rigidity distribution of panel members and generation of vibration, and discovered that it is relatively liable to cause vibrations in the presence of uniform rigidity distribution, and less likely to cause vibrations when the rigidity distribution is made as uneven as possible. Since vibration is a wave phenomenon having a specific period, and it is estimated that a specific rhythm is likely to be produced when the rigidity of the vibrating members (in this case, panel members) is uniform, but nodes and antinodes of a wave are less likely to be produced with a specific rhythm when the rigidity is uneven.

Therefore, in accordance with the present invention, there is provided a resin-made floor panel structure applied in a vehicle floor, according to claim 1.

In this case, to set uneven the rigidity of the floor panel, a plurality of concave storage spaces are integrally formed in the floor panel, and dimensions of these storage spaces and vertical walls formed among the storage spaces are set mutually different. Therefore the rigidity of the floor panel can be set only by forming the floor panel without increasing the cost or weight.

Further, in one embodiment of the present invention, preferably, vertical walls among storage spaces are set to be positioned on different lines in a plan view, so that high rigidity portions are set to be discontinuous.

In this case, the rigidity of the floor panel can be set uneven by relatively simple means of appropriately designing the portions corresponding to the vertical walls of molding die of floor panel.

Furthermore, in one embodiment of the present invention, preferably, the mutually facing vertical walls of storage spaces are set not parallel to each other, so that intervals between high rigidity portions and low rigidity portions are set uneven.

In this case, the intervals between high rigidity portions and low rigidity portions of the floor panel can be set uneven by relatively simple means of appropriately designing the portions corresponding to the vertical walls of molding die of floor panel.

Furthermore, in one embodiment of the present invention, preferably, the base surface of the floor panel is set in a curved surface, so that the rigidity of the floor panel is set uneven.

In this case, the floor rigidity can be set more finely by relatively simple means of appropriately designing the portion corresponding to the base surface of molding die of floor panel.

Furthermore, in one embodiment of the present invention, preferably, beads are formed in the floor panel, so that the rigidity of the floor panel is set uneven.

In this case, by forming beads in the floor panel, the rigidity of the floor panel is set uneven. Therefore, the floor rigidity can be set by a simple structure.

Furthermore, in one embodiment of the present invention, preferably, foamed portions are partly formed in the floor panel, so that the rigidity of the floor panel is set uneven.

In this case, foamed portions are formed partly in the floor panel, so that the rigidity of the floor panel is set uneven. Therefore the floor rigidity can be set while assuring the rigidity of the floor panel.

Still further, in accordance with a second aspect of the present invention, there is provided a resin-made floor panel structure applied in a vehicle floor, integrally forming a concave spare tire storage space, wherein the spare tire storage space has a basic shape of the outer circumference formed in an arc shape in a plan view.

According to the second aspect of the present invention, a concave spare tire storage space integrally formed in the floor panel has its basic shape of the outer circumference formed in an arc shape in a plan view, and therefore the rigidity distribution of the floor panel can be set uneven and vibration of floor panel in a wide range and propagation of noise can be suppressed by relatively simple means of appropriately designing the portion corresponding to the spare tire storage space of molding die of floor panel. That is, by using resin materials for the floor panel, the weight is reduced, and vibrations of the floor panel can be suppressed and generation of the noise can be prevented at the same time.

### BRIEF DESCRIPTION OF THE DRAWINGS

Fig. 1 is a schematic explanatory drawing of trunk of an automobile seen from behind the car body in a preferred embodiment of the invention;
Fig. 2 is a sectional explanatory drawing schematically showing a basic configuration of floor structure of the trunk;
Fig. 3 is a plan explanatory drawing showing a specific configuration of trunk floor of the trunk;
Fig. 4 is a perspective view showing a schematic configuration of trunk floor in a modified example of the preferred embodiment; and
Fig. 5 is a sectional explanatory drawing along line Y5-Y5 in Fig. 4.

### DETAILED DESCRIPTION OF THE INVENTION

A preferred embodiment of the invention is described below by referring to the accompanying drawings. The embodiment is to explain the present invention with an example in which it is applied to a floor panel structure of trunk disposed in a rear part of a car body of vehicle such as automobile, specifically.

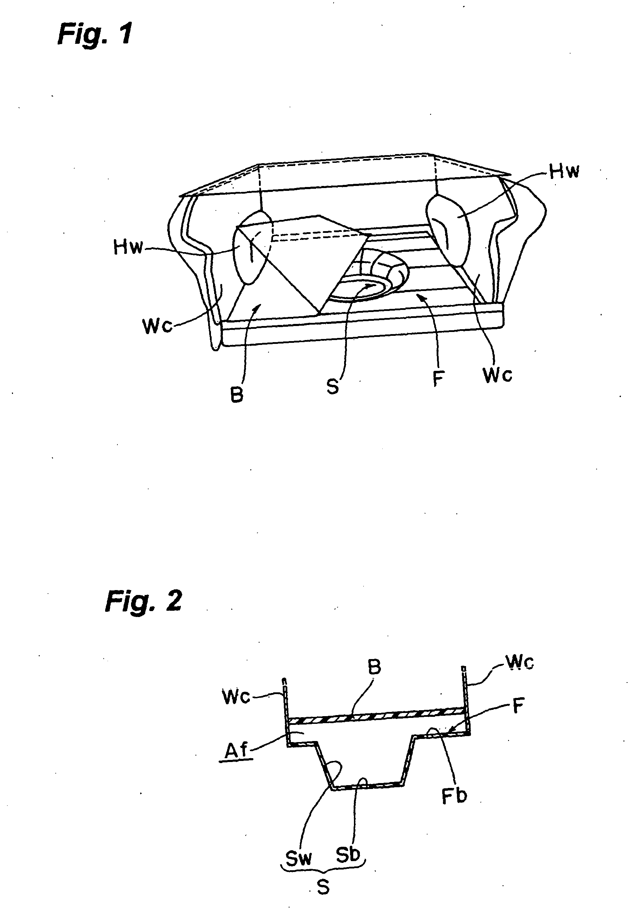

Fig. 1 is a schematic explanatory drawing of trunk of automobile seen from behind the car body in a preferred embodiment of the invention. Fig. 2 is a sectional explanatory drawing schematically showing a basic configuration of floor structure of the trunk.

As shown in the drawings, the trunk has a concave spare tire storage space S for accommodating a spare tire (not shown). The spare tire storage space S is formed in a floor panel F (trunk floor) constituting the floor. The trunk floor F is a one-body structure of synthetic resin material instead of a conventional steel plate structure.

Although not shown specifically in the drawings, both ends in the car width direction of the trunk floor F are supported by a pair of right and left frame members (rear side frames) extending in the longitudinal direction in the rear part of the car body. Front and rear ends of the trunk floor F are supported by a front frame and a rear end frame extending in the car width direction, respectively.

Above the trunk floor F, a trunk board B is disposed so as to cover the entire trunk floor F substantially. This trunk board B is also formed into one-body structure by using synthetic resin material.

In a relatively front side portion of right and left side walls Wc of the car body in the trunk, a pair of right and left wheel houses Hw are formed to cover the upper part of the right and left rear wheels (not shown).

The right and left side portions of the trunk board B preferably contact air-tightly with the right and left side walls Wc of the car body. Thereby, the air tightness of the space Af formed between the trunk board B and trunk floor F is heightened, and the noise such as road noise and tire noise from beneath the floor is absorbed as much as possible in the space Af, so that transmission of the noise to the compartment side is suppressed.

As the synthetic resin material for the trunk floor F and trunk board B, for example, a fiber reinforced plastic (FRP) material based on polypropylene (PP) resin may be used. Other usable resin materials include nylon, ABS, PPO, PBT, and other resin materials blending reinforcing materials, and various known materials. Reinforcing materials are not limited to glass fiber, carbon fiber, or other fiber reinforcing materials, but also include talc, glass beads, and other reinforcing materials. As the forming method, an injection forming method and other known methods may be applied.

The spare tire storage space S of the trunk floor F is, as known from Fig. 2, formed of a bottom part Sb for mounting a spare tire, and a peripheral wall part Sw rising from the peripheral edge of the bottom part Sb to a base surface Fb forming a flat reference plane of the trunk floor F.

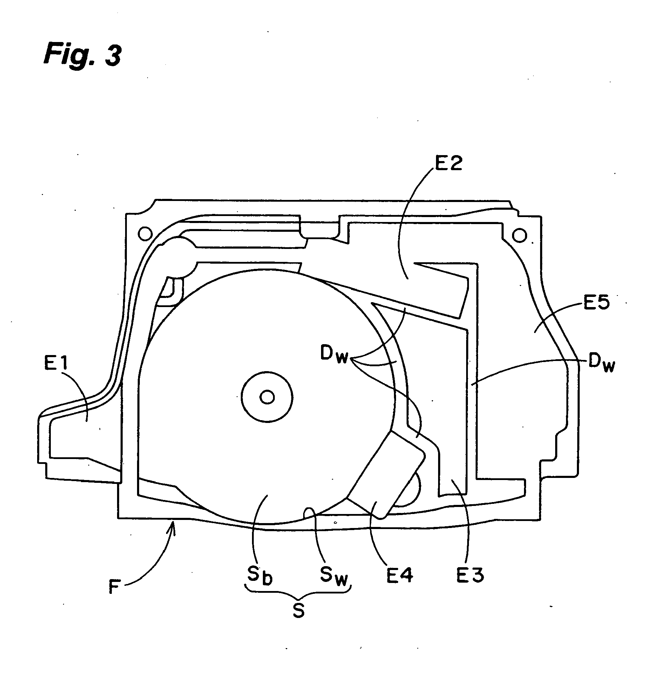

Fig. 3 is a plan explanatory view showing a specific configuration of trunk floor F.

As shown in the drawing, the trunk floor F integrally forms, aside from the spare tire storage space S, multiple commodity storage spaces E1 to E5 for accommodating various commodities. These commodity storage spaces E1 to E5 are formed in downward dented boxes (concave shape), and are individually sectioned by partition walls Dw. The commodity storage spaces E1 to E5 may be used as pockets for various articles such as jack, jack handle, wheel wrench, traction hook, first-aid kit, etc.

The spare tire storage space S and commodity storage spaces E1 to E5 are formed in concave shape, and, in the entire trunk floor F, the rigidity is very low in these portions, while the rigidity is high in the partition walls Dw dividing the storage spaces S, E1 to E5.

Therefore, when the trunk floor F vibrates, generally, the partition walls Dw of high rigidity are assumed to be nodes of the vibration rhythm, and the concave storage spaces S, E1 to E5 of low rigidity are assumed to be antinodes of the vibration rhythm.

In this preferred embodiment, the multiple commodity storage spaces E1 to E5 are uneven in shape and size (that is, two-dimensional and/or three-dimensional size specifications thereof are uneven), and the positions and directions are random and disorderly.

As a result, in any direction, intervals of high rigidity portions such as partition walls Dw and low rigidity portions such as concave storage spaces S, E1 to E5 can be set uneven. As for the spare tire storage space S, its peripheral wall portion Sw is not a complete circle in plan view, and its position is not in the center of the trunk floor F, but is biased to one side (left side in Fig. 3).

Thus, the concave storage spaces E1 to E5 formed integrally in the trunk floor F are set in uneven shape and size, and random and disorderly in position and direction, and hence the rigidity distribution of the trunk floor F is uneven two-dimensionally and/or three-dimensionally, and vibration of the trunk floor F and propagation of noise in a wide range can be suppressed.

Further, by setting uneven the intervals between high rigidity portions such as partition walls Dw and low rigidity portions such as concave storage spaces S, E1 to E5, formation of specific rhythm in nodes and anti-nodes can be prevented, and vibration of the trunk floor F can be suppressed.

That is, the weight is reduced by using resin materials for the trunk floor F, and the vibration of the trunk floor F can be suppressed and noise can be controlled at the same time. Moreover, without particularly increasing the cost or weight, the floor rigidity can be set only by forming the floor panel.

Uneven setting of rigidity distribution of the trunk floor F can be realized in various methods, and unevenness can be further enhanced.

For example, if the shapes of commodity storage spaces E1 to E5 are similar, by setting the dimensions (that is, two-dimensional size such as length or width and/or three-dimensional size such as depth) differently from each other, and further by setting the dimensions of partition walls Dw of the storage spaces (that is, two-dimensional size such as wall thickness and/or three-dimensional size such as depth or slope) differently from each other, the rigidity distribution of the trunk floor F can be set uneven two-dimensionally and/or three-dimensionally.

Moreover, as shown in Fig. 3, by positioning the partition walls Dw of the storage spaces S, E1 to E5 on different lines in plan view, that is, by setting so as not to be arranged on a specific line or curve, the high rigidity portions can be set to be discontinuous, and the rigidity distribution of the trunk floor F can be set uneven.

Also as shown in Fig. 3, the mutually facing vertical walls Dw of storage spaces S, E1 to E5 are set not parallel to each other substantially, thereby the intervals between high rigidity portions and low rigidity portions of the floor panel can be set uneven.

In these cases, too, without particularly increasing the cost or weight, the floor rigidity can be set only by forming the trunk floor F, that is, by relatively simple means of appropriately designing the portions corresponding to the vertical walls Dw of the molding die of the trunk floor F.

Further as shown in Fig. 3, the concave spare tire storage space S formed integrally in the trunk floor F has a basic shape of the outer circumference (that is, the peripheral wall Sw) formed in an arc shape in a plan view, and therefore the rigidity distribution of the trunk floor F can be set uneven only by relatively simple means of appropriately designing the portions corresponding to the spare tire storage space S of the molding die of the trunk floor F, and vibration of floor panel in a wide range and propagation of noise can be suppressed.

In this case, as mentioned above, the peripheral wall Sw of the spare tire storage space S is not a complete circle in plan view, and its position is not in the center of the trunk floor F, but is set in a range biased to one side (left side in Fig. 3), so that the rigidity distribution of the trunk floor F is more uneven.

Still more, by forming beads in the trunk floor F, the rigidity of the trunk floor F can be set uneven by a very simple structure. In this case, various beads can be formed by changing the bead position or direction or bead width. Also, these beads can be formed on various surfaces. Therefore, a high degree uf freedom can be obtained about setting of floor rigidity. Besides, by forming beads, the rigidity can be enhanced on the whole of the trunk floor F, and setting of the floor rigidity can be performed at the same time.

When forming the trunk floor F, by forming foamed portions partly, the rigidity of the trunk floor F can be also set uneven.

In this case, by the partial foamed portions, the rigidity of the entire trunk floor F can be enhanced, and the floor rigidity can be set at the same time.

By forming at least the base surface of the trunk floor in a curved surface, the rigidity of the trunk floor can be set uneven.

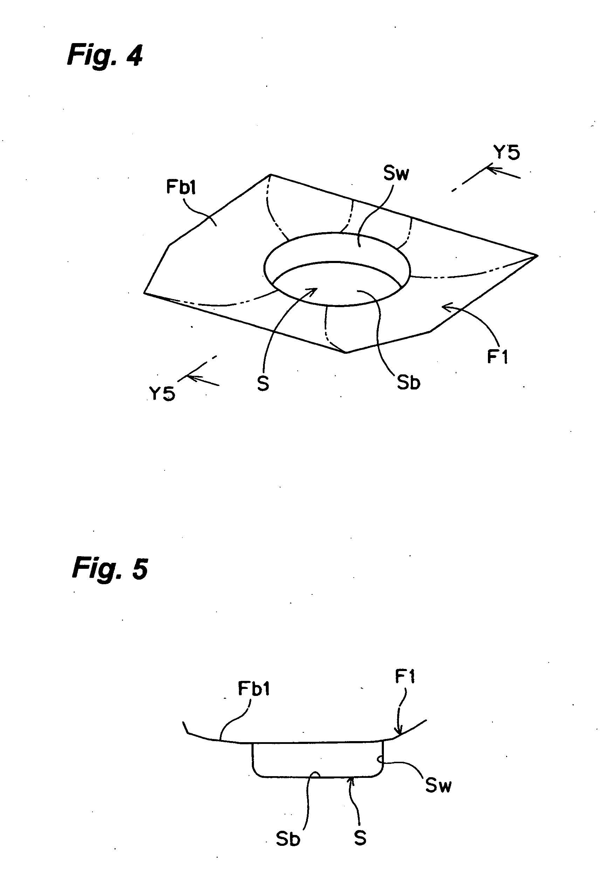

Fig. 4 is a perspective view showing a schematic configuration of trunk floor F1 in a modified example of a further aspect of the preferred embodiment, and Fig. 5 is a sectional explanatory drawing along line Y5-Y5 in Fig. 4.

As shown in these drawings, in this modified example, at least the base surface Fb1 of the trunk floor F1 is formed in a curved surface. The curved base surface Fb1 is more preferably set so that the curvature of curved surface may be different partially. Therefore, in any direction, the rigidity distribution of the trunk floor F1 is uneven two-dimensionally and/or three-dimensionally

In this case, too, without requiring any extra addition to the cost or weight, the floor rigidity can be set only by forming the trunk floor F1, that is, by a relatively simple setting of molding die of the trunk floor F1. Further more, by forming the base surface Fb1 in a curved shape, the rigidity can be enhanced on the whole of the trunk floor F1, and the floor rigidity can be set at the same time.

## Claims

1. A resin-made floor panel structure applied in a vehicle floor:
wherein rigidity distribution of floor panel (F) is set uneven, and intervals between high rigidity portions and low rigidity portions are set uneven;
wherein a plurality of concave storage spaces include a spare tire storage space (S) and a plurality of other commodity storage spaces (E1 - E5) and are integrally formed in the floor panel (F), and dimensions of these storage spaces and/or partition walls (Dw) sectioning the storage spaces are set mutually different, so that the rigidity of the floor panel (F) is set uneven;
**characterized in that**
the spare tire storage space (S) and one of the commodity storage spaces (E4) form a concave storage space (S, E4) with no partition walls (Dw) between said two storage spaces (S, E4), and a part of a peripheral vertical wall (Sw) of the spare tire storage space (S) forms a vertical wall (Sw) extending in depth direction of the concave storage space (S, E4) between the spare tire storage space (S) and said one of the commodity storage space (E4); and
dimensions of the vertical wall (Sw) formed between the spare tire storage space (S) and said one of the commodity storage spaces (E4) and the partition walls (Dw) sectioning other commodity storage spaces is set mutually different.

2. The resin-made floor panel structure of claim 1, wherein vertical walls (Dw) among storage spaces are set to be positioned on different lines in a plan view, so that high rigidity portions are set to be discontinuous.

3. The resin-made floor panel structure of claim 1 or 2, wherein the mutually facing vertical walls (Dw) of storage spaces are set not parallel to each other, so that intervals between high rigidity portions and low rigidity portions are set uneven.

4. The resin-made floor panel structure of any one of claims 1 to 3, wherein the base surface (Fb1) of the floor panel (F) is set in a curved surface, so that the rigidity of the floor panel (F) is set uneven.

5. The resin-made floor panel structure of claim 1, wherein the beads are formed in the floor panel (F), so that the rigidity of the floor panel (F) is set uneven.

6. The resin-made floor panel structure of claim 1, wherein foamed portions are partly formed in the floor panel (F), so that the rigidity of the floor panel (F) is set uneven.

7. A resin-made floor panel structure of claim 1, wherein the vertical wall (Sw) of the spare tire storage space (S) has a basic shape of an arc and is not a complete circle in plan view.

## Patentansprüche

1. In einem Fahrzeugboden verwendete Bodenplattenstruktur aus Harz:
wobei die Steifigkeitsverteilung der Bodenplatte (F) ungleichmäßig festgelegt ist und Abstände zwischen Abschnitten hoher Steifigkeit und Abschnitten geringer Steifigkeit ungleichmäßig festgelegt sind;
wobei mehrere konkave Stauräume einen Ersatzreifen-Stauraum (S) und mehrere andere Waren-Stauräume (E1 - E5) umfassen und in der Bodenplatte (F) integral ausgebildet sind und Maße dieser Stauräume und/oder die Stauträume unterteilenden Trennwände (Dw) jeweils unterschiedlich festgelegt sind, so dass die Steifigkeit der Bodenplatte (F) ungleichmäßig festgelegt ist;
**dadurch gekennzeichnet, dass**
der Ersatzreifen-Stautraum (S) und einer der Waren-Stauräume (E4) einen konkaven Stauraum (S, E4) ohne Trennwände (Dw) zwischen den beiden Stauräumen (S, E4) bilden und ein Teil einer umlaufenden vertikalen Wand (Sw) des Ersatzreifen-Stauraums (S) eine vertikale Wand (Sw) bildet, die sich in Tiefenrichtung des konkaven Stauraums (S, E4) zwischen dem Ersatzreifen-Stauraum (S) und einem der Waren-Stauräume (E4) erstreckt; und
die Maße der zwischen dem Ersatzreifen-Stauraum (S) und dem einem der Waren-Stauräume (E4) und den die anderen Waren-Stauräume unterteilenden Trennwänden (Dw) jeweils unterschiedlich festgelegt ist.

2. Bodenplattenstruktur aus Harz nach Anspruch 1, **dadurch gekennzeichnet, dass** vertikale Wände (Dw) zwischen Stauräumen so festgelegt sind, dass sie in Draufsicht auf unterschiedlichen Linien positioniert sind, so dass Abschnitte hoher Steifigkeit unterbrochen festgelegt sind.

3. Bodenplattenstruktur aus Harz nach Anspruch 1 oder 2, **dadurch gekennzeichnet, dass** die einander zugewandten vertikalen Wände (Dw) von Stauräumen nicht parallel zueinander festgelegt sind, so dass Abstände zwischen Abschnitten hoher Steifigkeit und Abschnitten niedriger Steifigkeit ungleichmäßig festgelegt sind.

4. Bodenplattenstruktur aus Harz nach einem der Ansprüche 1 bis 3, **dadurch gekennzeichnet, dass** die Grundfläche (Fb1) der Bodenplatte (F) in einer gebogenen Fläche festgelegt ist, so dass die Steifigkeit der Bodenplatte (F) ungleichmäßig festgelegt ist.

5. Bodenplattenstruktur aus Harz nach Anspruch 1, **dadurch gekennzeichnet, dass** die Sicken in der Bodenplatte (F) so ausgebildet sind, dass die Steifigkeit der Bodenplatte (F) ungleichmäßig festgelegt ist.

6. Bodenplattenstruktur aus Harz nach Anspruch 1, **dadurch gekennzeichnet, dass** in der Bodenplatte (F) geschäumte Abschnitte teilweise ausgebildet sind, so dass die Steifigkeit der Bodenplatte (F) ungleichmäßig festgelegt ist.

7. Bodenplattenstruktur aus Harz nach Anspruch 1, **dadurch gekennzeichnet, dass** die vertikale Wand (Sw) des Ersatzreifen-Stauraums (S) eine Grundform eines Bogens hat und in Draufsicht nicht ein vollständiger Kreis ist.

## Revendications

1. Structure de panneau de plancher fabriquée en résine appliquée dans un plancher de véhicule :
dans laquelle la distribution de rigidité du panneau de plancher (F) est mise en oeuvre irrégulièrement, et les intervalles entre les parties à haute rigidité et les parties à basse rigidité sont mis en oeuvre irrégulièrement ;
dans laquelle une pluralité d'espaces de stockage concaves comprend un espace de stockage du pneu de secours (S) et une pluralité d'autres espaces de stockage d'équipement (E1 - E5) et est formée intégralement dans le panneau de plancher (F), et les dimensions de ces espaces de stockage et/ou parois de séparation (Dw) séparant les espaces de stockage sont mises en oeuvre de manière interactivement différente, de sorte que la rigidité du panneau de plancher (F) est mise en oeuvre irrégulièrement ;
**caractérisée en ce que**
l'espace de stockage du pneu de secours (S) et l'un des espaces de stockage d'équipement (E4) forment un espace de stockage concave (S, E4) avec aucune paroi de séparation (Dw) entre lesdits deux espaces de stockage (S, E4), et une partie d'une paroi verticale périphérique (Sw) de l'espace de stockage du pneu de secours (S) forme une paroi verticale (Sw) s'étendant dans le sens de profondeur de l'espace de stockage concave (S, E4) entre l'espace de stockage du pneu de secours (S) et l'un desdits espaces de stockage d'équipement (E4) ; et
les dimensions de la paroi verticale (Sw) sont formées entre l'espace de stockage du pneu de secours (S) et l'un desdits espaces de stockage d'équipement (E4) et les parois de séparation (Dw) séparant d'autres espaces de stockage d'équipement sont mises en oeuvre de manière interactivement différente.

2. Structure de panneau de plancher fabriquée en résine de la revendication 1, dans laquelle des parois verticales (Dw) le long des espaces de stockage sont mises en oeuvre afin d'être positionnées sur des lignes différentes en vue de plan, de sorte que les parties à haute rigidité sont mises en oeuvre afin d'être discontinues.

3. Structure de panneau de plancher fabriquée en résine de la revendication 1 ou 2, dans laquelle les parois verticales se faisant interactivement face (Dw) des espaces de stockage sont mises en oeuvre de manière non parallèle l'une à l'autre, de sorte que les intervalles entre les parties à haute rigidité et les parties à basse rigidité sont mis en oeuvre irrégulièrement.

4. Structure de panneau de plancher fabriquée en résine d'une quelconque des revendications 1 à 3, dans laquelle la surface de base (Fb1) du panneau de plancher (F) est mise en oeuvre sur une surface incurvée, de sorte que la rigidité du panneau de plancher (F) est mise en oeuvre irrégulièrement.

5. Structure de panneau de plancher fabriquée en résine de la revendication 1, dans laquelle les talons sont formés sur le panneau de plancher (F), de sorte que la rigidité du panneau de plancher (F) est mise en oeuvre irrégulièrement.

6. Structure de panneau de plancher fabriquée en résine de la revendication 1, dans laquelle des parties en mousse sont formées partiellement sur le panneau de plancher (F), de sorte que la rigidité du panneau de plancher (F) est mise en oeuvre irrégulièrement.

7. Structure de panneau de plancher fabriquée en résine de la revendication 1, dans laquelle la paroi verticale (Sw) de l'espace de stockage du pneu de secours (S) a une forme de base d'un arc et n'est pas un cercle complet en vue de plan.
